## Europäisches Patentamt

(19) **European Patent Office**

**Office européen des brevets**

(11) Publication number: **0 112 374**
**B1**

(12) **EUROPEAN PATENT SPECIFICATION**

(45) Date of publication of patent specification: **12.11.86**

(21) Application number: **83902228.2**

(22) Date of filing: **22.06.83**

(86) International application number:
**PCT/US83/00963**

(87) International publication number:
**WO 84/00228 19.01.84 Gazette 84/02**

(51) Int. Cl.⁴: **G 06 K 7/10, G 02 B 26/10**

(54) **BEAM SCANNING APPARATUS.**

(30) Priority: **28.06.82 US 392448**

(43) Date of publication of application:
**04.07.84 Bulletin 84/27**

(45) Publication of the grant of the patent:
**12.11.86 Bulletin 86/46**

(84) Designated Contracting States:
**DE FR GB**

(56) References cited:
**US-A-3 947 816**
**US-A-4 030 806**
**US-A-4 097 729**

(73) Proprietor: **NCR Corporation**
**World Headquarters**
**Dayton, Ohio 45479 (US)**

(72) Inventor: **HARDY, James Alan**
**224 North 9th Street**
**Cambridge, OH 43725 (US)**

(74) Representative: **Robinson, Robert George**
**International Patent Department NCR Limited**
**206 Marylebone Road**
**London NW1 6LY (GB)**

Courier Press, Leamington Spa, England.

## Description

·This invention relates to beam scanning apparatus of the kind including light beam generating means adapted to provide a generated light beam, displaced beam generating means adapted to generate a plurality of displaced light beams from said generated light beam, and scanning means adapted to generate a scan pattern from said displaced light beams, wherein said displaced light beam generating means includes a rotatable member having a first reflective surface located in the path of said generated light beam and adapted to reflect the generated light beam to provide a reflected light beam. The invention has a particular application to the scanning of bar codes such as the Universal Produce Code (UPC).

Background art

Beam scanning apparatus is known from U.S. Patent specification No. 4,057,784. In such known apparatus a light beam provided by a laser source is directed onto a dichroic beam splitter to cause some of the light to be deflected at right angles to form a first beam, and pass the remainder of the light so that it strikes a mirror angled at 45° to provide a second beam parallel to the first beam. The first and second beams are then directed to respective oppositely rotating polygonal mirrors, the output beams from which impinge in an alternating manner on a vibrating mirror assembly, and thence are reflected via further mirrors to cause the production of a desired scan pattern. The known system has the disadvantage of requiring the utilization of specialized beam splitting coatings and the further disadvantage that the capability of such beam splitting coatings to produce a plurality of displaced, equal-power light beam is restricted.

Beam scanning apparatus is also known from U.S. Patent Specification No. 4,030,806. In this known apparatus a converging optical system converges a light beam such as a laser beam onto a focal point through which successive reflecting surfaces of a polygonal mirror rotate. A collimation optical system converts the angularly moving light beams diverged from the polygonal mirror into parallel moving light beams which are reflected onto the same or a further rotating polygonal mirror to provide scanning beams for scanning an object to be scanned.

Disclosure of the invention

It is an object of the present invention to provide beam scanning apparatus capable of providing a plurality of displaced light beams of substantially equal power without the use of specialized beam-splitting coatings.

According to the present invention, there is provided beam splitting apparatus of the kind specified, characterised by a plurality of lens members arranged to successively receive the reflected light beam as said rotatable member rotates and to focus the reflected light beam successively onto a plurality of second reflective surfaces which are adapted to reflect the focused beam back through the respective lens members onto said first reflective surface, thereby providing said plurality of displaced light beams parallel to said generated light beam.

It will be appreciated that beam scanning apparatus according to the invention has the capability of producing multiple spatially displaced beams of equal power for use in scanning a coded member. Furthermore the apparatus according to the invention has the capability of readily providing a desired number, in a preferred embodiment four, such scanning beans of equal power. Beam scanning apparatus according to the invention has the advantage of providing a simple, low-cost construction for generating a complex scan pattern at a high, uniform power suitable for scanning bar codes.

Brief description of the drawings

One embodiment of the present invention will now be described with reference to the accompanying drawings, in which:

Fig. 1 is a schematic representation of a first part of beam scanning apparatus for producing a plurality of displaced beams;

Fig. 2 is a schematic representation of a second part of said beam scanning apparatus for producing a scan pattern from the displaced beams; and

Fig. 3 is a schematic diagram useful for understanding the operational principle of the beam scanning apparatus.

Best mode for carrying out the invention

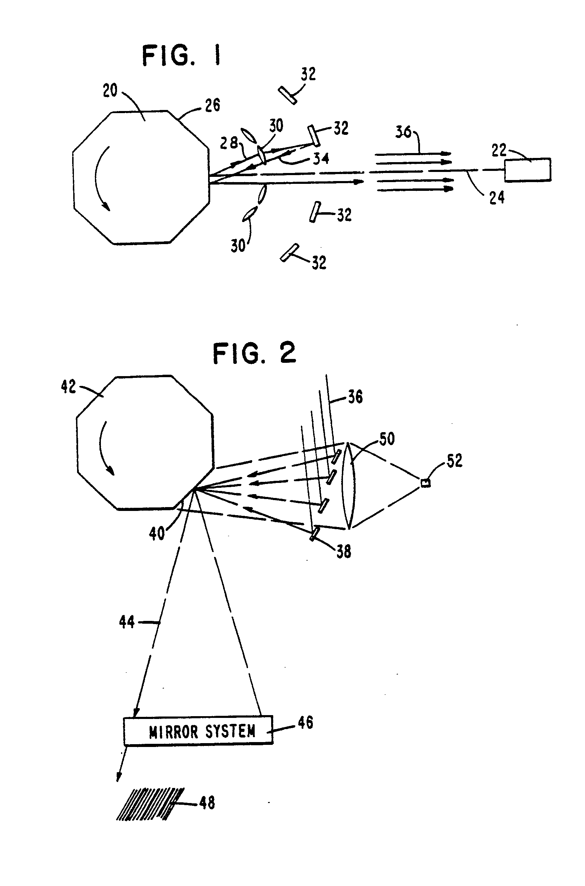

Referring now to Figs. 1—3 inclusive, there is shown schematic representations of one embodiment of the beam scanning apparatus of the present invention. Included in the scanning apparatus in a multifaceted polygonal mirror 20 rotating in a counterclockwise direction as indicated by the arrow shown in the drawing. Associated with the mirror 20 is a source of laser beams such as a helium-neon laser 22 which outputs a high spectral radiance light beam 24. It is to be understood that the aforementioned laser 22 is cited as one example of a laser that may be employed in the utilization of the present invention and that any other type of laser generating the required light beam may be used. The light beam 24 is directed so as to impinge on one of the facets 26 of the rotating mirror 20 which reflects a light beam 28 in a direction which is offset to the original direction of propagation of the light beam 24 due to the rotational displacement of the facet 26. The reflected light beam 28 is directed at one of a plurality of focusing lenses 30 which focuses the light beam on one of a plurality of stationary mirrors 32 orientated so as to reflect a light beam 34 back through the lens 30 which focuses the light beam at the surface of the facet 26 of the mirror 20. The focusing of the light beam on the mirror 20 by the lens 30 results in the angular change produced by the rotation of the facet 26 of the mirror being subtracted from the net angle of orientation of an output light beam 36. The use of the stationary mirror 32 adds to the orientation of the light beam 36 in angular displacement due to the orientation of the mirror 32. The resulting light beam 36 reflected from the facet 26 is then used in scanning a coded label in a manner to be described hereinafter. As the mirror 20 rotates in the counterclockwise direction, a plurality of serially-produced light beams 36 will be generated as the reflected beam 28 passes over the mirrors 32 successively. The beams 36 are of equal power and parallel to and displaced from the incident beam 24 by amounts dependent on the orientation of the mirrors 32.

As shown in Fig. 2, the output light beams 36 are directed at a plurality of second stationary mirrors 38 which are orientated to direct the reflected light beams 36 at a spot on one of the facets 40 of a second rotating polygonal mirror 42 which is rotating at the same speed as the mirror 20 in the counterclockwise direction as indicated by the arrow in Fig. 2. The light beams 44 reflected from the facets 40 are directed at a mirror system 46 which directs the light beams 44 into a scan pattern for scanning a bar coded label 48. The mirror system 46 is an arrangement of mirrors which results in directing a single light beam along a predetermined path. Since each of the light beams 44 will be along a different path coming from a facet 40, the mirror system 46 will provide a multi-line scan pattern for scanning the bar code. Light beams reflected from the label 48 are directed by the mirror system 46 at one of the facets 40 of the mirror 42 which reflects the light beams towards a focusing lens 50. The focusing lens 50 directs the light beams at a detector member 52 which converts the light beams into electrical signals in a manner that is well-known in the art.

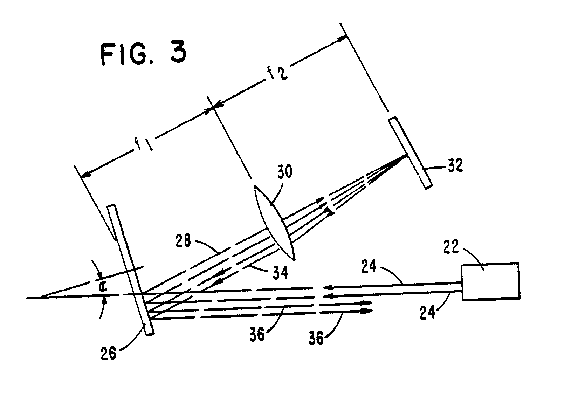

In order to explain the control of the direction of the light beams 36, there is shown in Fig. 3 an arrangement in which the facet 26 of the mirror 20 (Fig. 1) is orientated at an angle α with the plane in which the laser beam 24 impinges on the facet 26 directing the reflected light beams 28 towards the focusing lens 30 which has focal lengths $f_1$ and $f_2$ and which focuses the light beams 28 at the surface of the stationary mirror 32. The mirror 32 reflects the light beams 34 towards the lens 30, which directs the light beams 34 at the facet 26. Due to the orientation of the mirror facet 26, such facet will direct the parallel light beams 36 in a direction parallel to the laser beams 24 but displaced from the position of such beams 24.

## Claims

1. Beam scanning apparatus including light beam generating means (22) adapted to provide a generated light beam (24), displaced beam generating means (20, 26, 30, 32) adapted to generate a plurality of displaced light beams (36) from said generated light beams (24), and scanning means (38, 40, 42, 46) adapted to generate a scan pattern from said displaced light beams (36), wherein said displaced light beam generating means includes a rotatable member (20) having a first reflective surface (26) located in the path of said generated light beam (24) and adapted to reflect the generated light beam (24) to provide a reflected light beam (28), characterized by a plurality of lens members (30) arranged to successively receive the reflected light beum (28) as said rotatable member (20) rotates and to focus the reflected light beam (28) successively onto a plurality of second reflective surfaces (32) which are adapted to reflect the focused beam back through the respective lens members (30) onto said first reflective surface (26), thereby providing said plurality of displaced light beams (36), parallel to said generated light beam.

2. Beam scanning apparatus according to claim 1, characterized in that said rotatable member (20) includes a plurality of first reflective surfaces (26) located around a periphery thereof.

3. Beam scanning apparatus according to claim 1, characterized in that said light beam generating means is a laser device (22).

4. Beam scanning apparatus according to claim 1, characterized in that said scanning means includes a further rotatable member (42) having a plurality of third reflective surfaces (40) adapted to receive said displaced light beams (36) thereby providing a plurality of beam scan paths.

5. Beam scanning apparatus according to claim 4, characterized in that said beam scan paths are directed by a mirror system (46) to form said scan pattern.

6. Beam scanning apparatus according to claim 4, characterized in that a plurality of fourth reflective surfaces (38) are located in the paths of said displaced light beams (36) to direct the displaced light beams (36) onto a spot through which said third reflective surfaces (40) successively pass.

7. Beam scanning apparatus according to claim 4, characterized in that light reflected from a record medium scanned by said scan pattern is directed by one of said third reflective surfaces (40) towards detecting means (50, 52).

## Patentansprüche

1. Strahlabtasteinrichtung mit einer Lichtstrahlerzeugungsvorrichtung (22), die geeignet ist, einen erzeugten Lichtstrahl (24) abzugeben, versetzten Strahlerzeugungsvorrichtungen (20, 26, 30, 32), die geeignet sind, eine Vielzahl von gegenüber dem erzeugten Lichtstrahl (24) versetzten Lichtstrahlen (36) abzugeben, und Abtastvorrichtungen (38, 40, 42, 46), die geeignet sind, ein Abtastmuster von den versetzten Lichtstrahlen (36) zu erzeugen, wobei die versetzten Lichtstrahlerzeugungsvorrichtungen ein drehbares Glied (20) aufweisen mit einer ersten reflektierenden Fläche (26), die in dem Weg des erzeugten Lichtstrahls (24) angeordnet und geeignet ist, den erzeugten Lichtstrahl (24) zu reflektieren, so daß sich ein reflektierter Lichtstrahl ergißt, gekennzeichnet durch eine Vielzahl von Linsengliedern (30), die angeordnet sind, um aufeinanderfolgend den reflektierenden Lichtstrahl (28) zu empfangen, während sich das drehbare Glied (20) dreht, und den reflektierten Lichtstrahl (28) aufeinanderfolgend auf eine Vielzahl von zweiten reflektierenden Flächen (32) zu fokusieren, die geeignet sind, den fokusierten Strahl zurückzureflektieren durch die entsprechenden Linsenglieder (30) auf die erste reflektierende Fläche (26), wodurch sich die Vielzahl von versetzten Lichtstrahlen (36) parallel zu den erzeugten Lichtstrahl ergibt.

2. Strahlabtasteinrichtung nach Anspruch 1, dadurch gekennzeichnet, daß das drehbare Glied (20) eine Vielzahl von ersten reflektierenden Flächen (26) aufweist, die um seinen Umfang angeordnet sind.

3. Strahlabtasteinrichtung nach Anspruch 1, dadurch gekennzeichnet, daß die Lichtstrahlerzeugungsvorrichtung eine Laservorrichtung (22) ist.

4. Strahlabtasteinrichtung nach Anspruch 1, dadurch gekennzeichnet, daß die Abtastvorrichtung ein weiteres drehbares Glied (42) aufweist mit einer Vielzahl dritter reflektierender Flächen (40), die geeignet sind, die versetzten Lichtstrahlen (36) zu empfangen, wodurch eine Vielzahl von Strahlabtastbahnen geschaffen wird.

5. Strahlabtasteinrichtung nach Anspruch 4, dadurch gekennzeichnet, daß die Strahlabtastbahnen durch ein Spiegelsystem (46) ausgerichtet sind, um das Abtastmuster zu bilden.

6. Strahlabtasteinrichtung nach Anspruch 4, dadurch gekennzeichnet, daß eine Vielzahl vierter reflektierender Flächen (36) in den Bahnen der versetzten Lichtstrahlen (36) angeordnet sind, um die versetzten Lichtstrahlen (36) auf einen Punkt zu richten, durch den die dritten reflektierenden Flächen (40) aufeinanderfolgend laufen.

7. Strahlabtasteinrichtung nach Anspruch 4, dadurch gekennzeichnet, daß von einem durch das Abtastmuster abgetastetem Aufzeichnungsträger reflektiertes Licht durch eine der dritten reflektierenden Flächen (40) auf Detektorvorrichtungen (50, 52) gerichtet wird.

**Revendications**

1. Appareil de balayage par faisceau comprenant des moyens (22) de génération d'un faisceau lumineux conçus pour produire un faisceau lumineux généré (24), des moyens (20, 26, 30, 32) de génération de faisceaux décalés conçus pour générer plusieurs faisceaux lumineux décalés (36) à partir dudit faisceau lumineux généré (24), et des moyens de balayage (38, 40, 42, 46) conçus pour générer une mire de balayage à partir desdits faisceaux lumineux décalés (36), lesdits moyens de génération des faisceaux lumineux décalés comprennant un élément rotatif (20) présentant une première surface réfléchissante (26) placée sur le trajet dudit faisceau lumineux généré (24) et conçue pour réfléchir le faisceau généré (24) afin de produire un faisceau lumineux réfléchi (28), charactérisé par plusieurs éléments à lentilles (30) agencés de façon à successivement recevoir le faisceau lumineux réfléchi (28) lorsque ledit élément rotatif (20) tourne et à focaliser le faisceau lumineux réfléchi (28) successivement sur plusieurs secondes surfaces réfléchissantes (32) qui sont conçues pour renvoyer par réflexion le faisceau focalisé à travers les éléments à lentilles respectifs (30) sur ladite première surface réfléchissante (26), afin de produire lesdits faisceaux lumineux décalés (36) parallèles audit faisceau lumineux généré.

2. Appareil de balayage par faisceau selon la revendication 1, caractérisé en ce que ledit élément rotatif (20) comprend plusieurs premières surfaces réfléchissantes (26) placées sur sa périphérie.

3. Appareil de balayage par faisceau selon la revendication 1, caractérisé en ce que lesdits moyens de génération de faisceau lumineux comprennent un dispositif à laser (22).

4. Appareil de balayage par faisceau selon la revendication 1, caractérisé en ce que lesdits moyens de balayage comprenant un autre élément rotatif (42) présentant plusieurs troisièmes surfaces réfléchissantes (40) conçues pour recevoir lesdits faisceaux lumineux décalés (36) afin d'établir plusieurs trajets de balayage par faisceau.

5. Appareil de balayage par faisceau selon la revendication 4, caractérisé en ce que lesdits trajets de balayage par faisceau sont dirigés par un système de miroirs (46) pour former ladite mire de balayage.

6. Appareil de balayage par faisceau selon la revendication 4, caractérisé en ce que plusieurs quatrièmes surfaces réfléchissantes (38) sont placées sur les trajets desdits faisceaux lumineux décalés (36) afin de diriger les faisceaux lumineux décalés (36) sur un point par lequel lesdites troisièmes surfaces réfléchissantes (40) passent les unes à la suite des autres.

7. Appareil de balayage par faisceau selon la revendication 4, caractérisé en ce que la lumière réfléchie par un support d'enregistrement balayé par ladite mire de balayage est dirigée par une desdites troisièmes surfaces réfléchissantes (40) vers des moyens de détection (50, 52).

# FIG. 1

# FIG. 2

MIRROR SYSTEM

FIG. 3